# EUROPEAN PATENT SPECIFICATION

(11) **EP 4 162 832 B1**
(45) Date of publication and mention of the grant of the patent: **26.11.2025**
(21) Application number: 22199835.4
(22) Date of filing: 05.10.2022
(51) Int. Cl.: A43B 3/42

(54) **SYSTEM FOR A SHOE SOLE, METHOD FOR OPERATING THE SYSTEM, A SHOE SOLE, AND A SHOE**
SYSTEM FÜR EINE SCHUHSOHLE, VERFAHREN ZUM BETREIBEN DES SYSTEMS, SCHUHSOHLE UND SCHUH
SYSTÈME POUR SEMELLE DE CHAUSSURE, PROCÉDÉ DE FONCTIONNEMENT DU SYSTÈME, SEMELLE DE CHAUSSURE ET CHAUSSURE

(30) Priority: 08.10.2021 DE 102021211372
(43) Date of publication of application: 12.04.2023
(73) Proprietor: adidas AG, 91074 Herzogenaurach (DE)
(72) Inventor: Jensen, Ulf, 91074 Herzogenaurach (DE); Dümler, Burkhard, 91074 Herzogenaurach (DE); Spies, Peter, 91074 Herzogenaurach (DE); Zessin, Henrik, 91056 Erlangen (DE); Lühmann, Lars, 90552 Röthenbach (DE); Torvinen, Vesa-Pekka, 91074 Herzogenaurach (DE)
(74) Representative: Bardehle Pagenberg Partnerschaft mbB Patentanwälte Rechtsanwälte

(56) References cited:
- WO-A1-2016/196363
- US-A1- 2005 258 717
- US-A1- 2017 208 890

## Description

### 1. Technical field

The present invention relates to a system for a shoe sole with at least one piezoelectric element for generating electrical energy. Further, the present invention relates to a shoe sole comprising the system, a shoe comprising the shoe sole, and a method for operating the system.

### 2. Prior art

Sport is an integral part of the daily life. For instance, people go running to improve their fitness and to reduce stress. To this end, various digital approaches are known to obtain data of the athletes, such as number of steps, distance travelled, cadence, pace, speed, and so on. In this view, there are many systems for monitoring one's athletic performance during or after the training, preferably by using integrated sensors on the person or the sports apparel, e.g., the shoes, such as GPS sensors and / or motion sensors. During or after the workout, the measured parameters may then be transferred to a monitoring device such as a smartphone. Moreover, sports apparel or sporting goods such as sports shoes may also include other electronic devices such as lighting, powering of actuators, temperature regulation, safety features, adaption of properties and the like.

These sensors and electronic devices typically need energy sources like a battery. In case the energy sources become empty and need to be replaced, important data may be lost or the respective devices do not work anymore.

One example of other sensors or electronic devices involves piezoelectric elements for generating or harvesting electrical energy during the athletic performance, which may then be stored or used for operating the respective sensors and the overall system.

The applicant disclosed in EP 3 235 395 A1 a system for a shoe sole with at least one module, wherein the module comprises at least one piezoelectric element adapted to produce an electrical signal upon mechanical deformation of the at least one piezo element. The electrical signal is adapted to be used as signal for deriving at least one motion parameter of the shoe sole. The system further comprises at least a first energy storage and a second energy storage, wherein the at least first and second energy storages are adapted to store electrical energy obtained from the electrical signal, and the second energy storage is loaded only after the first energy storage reaches a first energy threshold.

Further prior art is disclosed in US 2013/0028368 A1, US 2014/0088917 A1, and "Insole Pedometer With Piezoelectric Energy Harvester and 2V Organic Circuits" by Ishida et al. as well as US 2018/0 140 039 A1 and US 2008/0 083 139 A1.

However, a common disadvantage of the prior art is that the known systems depend on pre-stored input voltages corresponding to specific mechanical deformations of the shoe. For example, two athletes with different weights running at different speeds on different surfaces will generate different input voltages to the piezoelectric elements so that the system might not work anymore or not efficiently.

Therefore, it is an object underlying the present invention to overcome said disadvantages of the prior art and provide an improved shoe sole with piezoelectric elements for harvesting electrical energy.

US 2017/208890 A1 is directed to a system for a shoe sole with at least one module being provided, which includes at least one piezoelectric element adapted to produce an electrical signal upon mechanical deformation of the at least one piezo element. The electrical signal is adapted to be used as signal for deriving at least one motion parameter of the shoe sole. The system further includes at least a first energy storage and a second energy storage, the at least first energy storage and second energy storages being adapted to store electrical energy obtained from the electrical signal, and the second energy storage is loaded only after the first energy storage reaches a first energy threshold.

WO 2016/196363 A1 is directed to a wearable article, a system, and methods including a structural material configured to enable the wearable article to the worn on a body, a piezoelectric generator, positioned with respect to the structural material in a configuration to be flexed to output a voltage, a data translator, coupled to the piezoelectric generator, configured to output electronic data based on the voltage, and an electronic data storage, coupled to the data translator, configured to store the electronic data from the data translator.

### 3. Summary of the invention

This object is accomplished by the teachings of the independent claims. Advantageous embodiments are contained in the dependent claims.

In one embodiment, a system for a shoe sole comprises (a.) at least one piezo element adapted to produce an electrical signal upon mechanical deformation of the at least one piezo element, (b.) at least one first energy storage and at least one second energy storage, wherein the at least one first energy storage and the at least one second energy storage are adapted to store electrical energy obtained from the electrical signal, and (c.) at least one converter unit adapted to selectively control a transfer of an amount of electrical energy between the at least one first energy storage and the at least one second energy storage.

Whereas the prior art systems are limited to the specific input voltage(s) of the piezoelectric elements in the shoe sole, the present invention follows an improved approach by providing at least one converter unit using the effect of electrical power conversion. This process involves the conversion (or transformation) of electrical energy from one form to another, such as a change of the voltage. To this end, the at least one converter unit allows to selectively control the change of voltages applied to the first energy storage (e.g., capacitance) so that different amounts of electrical energy generated from the mechanical deformation of the piezo element may be transferred to the second energy storage. In this way, an improved system may be provided that is adaptive to different input voltages from the piezo element and the amount of energy consumed by its components such as sensors or electronic devices. Therefore, the whole system may operate more efficiently by the adapted transfer of voltages.

It should be noted that the terms "voltage", "energy", "power", "charge" and "current" as used in the present application may be connected by the known equations for capacitance, electrical energy, and power in electrical circuits: C=Q/V, where C is capacitance, Q is charge, and V is voltage; W=0.5*C*V², where W is electrical energy, C is capacitance, and V is voltage; and P=V*I, where P is electrical power, V is voltage and I is current.

Moreover, the terms "piezo" and "piezoelectric" as used in the present application may be interchangeable. Same applies for the terms "electric" and "electrical". Moreover, it should be noted that the control of the transfer of an amount of electrical energy by the at least one converter unit is in such a selective way that follows a kind of regular (or calculable) pattern with a certain periodicity. A simple (irregular) switching on and off of the at least one converter unit by a human should not refer to the selective control according to the present invention.

The at least one converter unit is adapted to selectively control the transfer of an amount of electrical energy based at least in part on a switching frequency. The switching frequency may correspond to a switch between a charge state and a discharge state of the at least one converter unit. In this way, the inventors found out that the selective control by the converter unit may be optimized because using oscillations between a charge and a discharge state of the converter unit with a certain switching frequency allows to preciously control the amount of electrical charge to be transferred (and thus the amount of electrical energy). For example, at a higher switching frequency, more charge may be transferred in the same amount of time because the charge state occurs more often.

The switching frequency may be based at least in part on the electrical signal of the at least one piezo element and/or an overall power used by the system. This embodiment further allows a better control of the transfer of electrical energy between the two energy storages. Therefore, better adaptiveness between different input voltages and the required power for the system may be provided. In one example, if two capacitors are used as first and second energy storages, the capacities of the respective capacitors may be as follows: first capacitor may have a capacity in the range of 15 to 30 µF and the second capacitor may have a capacity in the range of 100 to 150 µF so that the required optimized amount of electrical energy for parts the system that are operating may be determined.

The system further comprises a control unit adapted to calculate the switching frequency. For example, the control unit may be a microcontroller, a programmable logic or an integrated circuit or another suitable electrical component being part of the system that may allow to calculate or determine the optimal switching frequency depending on the input voltage generated by the piezo element and the power that is used by the system. Alternatively, other controllers for remote transmission may be used (e.g., a Bluetooth Low Energy (BTLE), Bluetooth, Bluetooth Smart, IrDA, Near Field Communication (NFC), cellular network, ZigBee, Wifi, or other controller using suitable standards) and may allow to calculate the optimal switching frequency depending on the input voltage generated by the piezo element and the power that is used by the system.

The charge state may have a duration in the range of 20 to 180 ns, preferably 50 to 150 ns, more preferably 80 to 120 ns, most preferably about 100 ns or 200 to 400 ns, preferably 250 to 350 ns, more preferably 275 to 325 ns or 225 to 275 ns, most preferably about 300 ns. Such durations may be seen as pulse durations of charging time during the charge state of the at least one converter unit. Together with the switching frequency (corresponding to the number of these pulses) the total amount of electrical energy to be transferred may be determined. These numbers for the duration have been found to provide a reasonable compromise between the sufficient amount of electrical energy to be transferred during the charge state and reliable operation of the whole system. In this context and also in the following, the term "about" refers to typical measuring tolerances in the technical field of the present invention.

The at least one converter unit may have an active mode and a non-active mode, wherein a transition between the active mode and the non-active mode may be based at least in part on a lower threshold and/or an upper threshold for the electrical energy measured at the at least one first energy storage and wherein the selective control of the at least one converter unit may only be provided in the active mode. In this way, unnecessary energy consumption of the converter unit may be avoided. It allows that the converter unit may only start its selective control when sufficient electrical energy levels in the energy storages are provided and the excess energy provided by the piezo element may be transferred and stored.

The at least one converter unit may be a flyback converter having a primary transformer side connected with the at least one first energy storage and a secondary transformer side connected with the at least one second energy storage. The electrical energy may be transferred from the at least one first energy storage to the at least one converter unit in the charge state and the electrical energy is transferred from the at least one converter unit to the at least one second energy storage in the discharge state.

A flyback converter may be used as a transformer for direct current (DC) conversion, i.e., DC/DC conversion, with galvanic isolation between the input and any outputs. To this end, the conversion or change of the voltage may be provided in a secure and reliable manner. Moreover, this electrical component may be easily adapted to the mentioned switching frequency and its calculation. For example, when the flyback converter is in the charge state, electrical energy is loaded during the duration of the charge state from the first energy storage (e.g., input capacitor) to the primary transformer side. As soon as the flyback converter switches into the discharge state, the electrical energy is transferred from the primary transformer side into the secondary transformer side of the flyback converter and thus to the second energy storage (e.g., output capacitor).

The at least one converter unit may comprise a metal oxide semiconductor field-effect transistor, MOSFET, switch adapted to switch the at least one converter unit between the charge state and the discharge state. This component may provide certain advantages: a greater efficiency while operating at lower voltages, the absence of a gate current results in high input impedance producing high switching frequencies, and it operates at lower electrical power and draws no current (or charge).

The system may further comprise a power management unit adapted to generate a control signal to switch the at least one converter unit between the charge state and the discharge state. Such a component may control or instruct the mentioned control unit in a reliable manner to further control the switching of the converter unit.

The system may further comprise at least one third energy storage adapted to store electrical energy obtained from the electrical signal and to provide electrical energy to the at least one second energy storage when the electrical signal from the at least one piezo element drops below a piezo threshold of electrical energy.

The capacity of the third energy storage may be larger than that of the first and the second energy storages so that when the athlete has to pause for a moment or even after the activity, data may be transferred from the system to an external and remote device, such as a smartphone, smartwatch, tablet computer, personal computer or another device. This is advantageous because it may be ensured that the time needed for getting the system ready may be reduced by using the first energy storage without taking the risk that meanwhile the electrical energy has been used for other, less necessary, aspects such as data transmission to a remote device, operation of LEDs and so on. It is therefore better to have separately controllable energy storages (e.g., when the electrical signal from the at least one piezo element drops below the piezo threshold of electrical energy). The type of third capacitor may be a supercapacitor, a thin film lithium battery or similar. The leakage current in the third energy storage should be as small as possible to keep the charge several hours/days. For example, this may be achieved by suitable selection of the first and second storages, e.g., the capacitors. For instance, some capacitors may have lower leakage than other capacitors. In one example, the third energy storage may also be charged in the factory during manufacturing process. However, alternatively or additionately, it may also be charged during use. In one example, the third energy storage is loaded only after the second energy storage has reached a threshold voltage.

The system may further comprise at least one regulator unit, preferably a junction field-effect transistor, JFET, regulator, adapted to switch between a regulating mode and a non-regulating mode of the at least one regulator unit based at least in part of a regulation threshold of electrical energy. Moreover, the regulating mode may cause the at least one second energy storage staying in a regulated voltage range between 1.0 to 4.0 V, preferably 1.5 to 3.5 V, more preferably 2.0 to 3.0 V or 2.0 to 5.5 V or 3.0 to 4.2 V so that electrical energy accumulates in the at least one first energy storage and/or, preferably, the control unit and the power management unit operate in this regulated voltage range. In this way, better energy supply for the overall system and improved control of the converter unit may be provided by the regulated mode. Furthermore, the indicated numbers have been found to optimize this mode. In particular, a JFET may be useful because it has a high input impedance, is fabricated in small size area, has less noise in the electrical circuit, has a low power consumption, and has a negative temperature coefficient of resistance so that higher temperature stability may be provided. Moreover, a JFET may also be helpful for the startup of the system from empty energy storages or from a complete shutdown because the power management unit has no voltage so the second energy storage may be charged by the J-FET and, once the power management unit is on, the J-FET may be shut off so that the more efficient converter unit may take over and transfer the energy from first to second energy storage.

The system may comprise at least one comparator unit adapted to measure the regulation threshold of electrical energy. In this way, a more stable operation of the mentioned regulating mode may be provided by this further component.

Moreover, the module may further comprise at least one rectifying unit adapted to convert the electrical signal. The electrical (current) signal from the piezoelectric element is alternating current (AC) due to different mechanical deformations (e.g., mechanical strain is exerted and released on the piezoelectric element). The rectifying unit may convert the AC current into a DC current to be further provided to the energy storages. Consequently, the rectifying unit allows to better use the electrical current (and thus the electrical energy) from the piezoelectric element for different mechanical deformations.

The system may further comprise at least one of the following components: a signal processing unit, a first comparator unit, a second comparator unit, a first switching unit, a second switching unit, a third switching unit, or a battery unit. Moreover, the system may comprises at least one of the following arrangements: the at least one piezo element is connected to the signal processing unit; the at least one rectifying unit is connected between the at least one piezo element and the at least one first energy storage; the at least one first energy storage is connected to at least one of the at least one regulator unit, the at least one converter unit, or the power management unit; the at least one regulator unit is connected between the at least one first energy storage and the at least one second energy storage, and is connected to the first comparator unit; the at least one converter unit is connected to at least one of the at least one first energy storage, the at least one second energy storage, or the power management unit; the at least one second energy storage is connected to at least one of the at least one third energy storage, preferably by the first switching unit, the first comparator unit, or the second comparator unit; the first comparator unit is connect with the first switching unit; the at least one third energy storage is connected to at least one of the battery unit, preferably by the second switching unit, the control unit, preferably by the third switching unit, and the power management unit; the control unit is connected to the power management unit; and the power management unit is connected to at least one of the signal processing unit, the second switching unit, or the third switching unit. All these embodiments follow the idea of optimizing the energy storage and consumption of the overall system according to the invention.

The system may be integrated into a cavity of an insole, a midsole or an outsole of a shoe. Here, one or more parts of the system may be integrated within different parts of the shoe or the shoe sole depending on one or more of the uses, contexts or sports of the athlete (e.g., a trail running or playing soccer) so that reliable operation of the system may be obtained. For example, a running shoe has a thicker midsole so that there is more space to integrate the system whereas a soccer shoe has no midsole so that the system (or pasts thereof) has to be integrated into the insole and/or outsole.

At least two piezo elements may be arranged in a heel area and/or a forefoot area of the shoe sole. During use of the shoe and the shoe sole, respectively, there may be some parts of the shoe sole with more mechanical deformation such as (vertical) pressure on the shoe sole or bending of the shoe sole. For example, the heel area and/or forefoot area may be subjected with higher pressure than the midfoot area. Moreover, the forefoot area may be subjected with higher bending than other areas of the shoe sole. In this way, the area with the highest pressure or highest bending may depend on the specific activity, e.g., it may make a difference whether the wearer is playing soccer requiring long sprints or playing basketball requiring quick lateral movements. Therefore, by placing multiple piezo elements in certain areas of the shoe sole and by considering these aspects, improved energy efficiency of the overall system may be obtained.

Another aspect of the present invention relates to a shoe sole comprising one of the mentioned embodiments of a systems according to the invention. Yet another aspect of the present invention relates to a shoe, in particular a sports shoe, comprising this shoe sole. The same advantages as mentioned for the system also apply here.

Yet another aspect of the present invention relates to a method for operating the system as mentioned above, wherein the method comprises the steps of (a.) generating the electrical signal upon mechanical deformation of the at least one piezo element, and (b.) selectively controlling the transfer of an amount of electrical energy between the at least one first energy storage and the at least one second energy storage. The step of selectively controlling comprises switching the at least one converter unit between the charge state and the discharge state by using the switching frequency, wherein the electrical energy is transferred from the at least one first energy storage to the at least one converter unit in the charge state and the electrical energy is transferred from the at least one converter unit to the at least one second energy storage in the discharge state. The method further comprises the step of calculating the switching frequency. The method may further comprise the step of switching the system between the active mode and the non-active mode and/or between the regulating mode and the non-regulating mode. Here, the same advantages as mentioned for the system also apply.

### 4. Short description of the figures

In the following, exemplary embodiments of the invention are described with reference to the figures.
- Fig. 1:: shows an exemplary schematic diagram of a system for a shoe sole according to the present invention; and
- Figs. 2A and 2B:: illustrate the circuit and operation of a converter unit in a system for a shoe sole according to the present invention.

### 5. Detailed description of preferred embodiments

In the following some embodiments of the invention are described in detail with particular reference to a system for a shoe sole comprising at least one piezoelectric element and other electronic components, such as energy storages and at least one converter unit. However, the concept of the present invention may identically or similarly be applied to other parts of the shoes to generate and store electrical energy from the mechanical deformation of the piezoelectric elements, like the shoe upper. Moreover, this concept may also identically or similarly be applied to any sports equipment or functional sportswear with sufficient mechanical deformation for piezo-electrics, such as a ball, e.g. for soccer, rugby, American football, basketball, baseball etc., or such as shirts, clothes, socks, underwear, or to a piece of sports equipment such as a tennis racket, golf club, baseball bat, badminton racket, cricket bat, ice-hockey stick, hockey stick, ice skating blades, sledding attachments, jumping attachments, attachments with wheels, attachments with springs, fin-like attachments, attachments that allow hovering, flying, squash racket, table-tennis bat, boxing gloves, ski, snowboard, kite, and the like.

It is to be understood that these exemplary embodiments may be modified in a number of ways and combined with each other whenever compatible and that certain features may be omitted in so far as they appear dispensable.

It should be noted that the terms of "voltage", "energy", "power", "charge" and "current" as used in the present application may be connected by the known equations for the capacitance, electrical energy, and power in electrical circuits: C=Q/V, where C is capacitance, Q is charge, and V is voltage; W=0.5*C*V², where W is electrical energy, C is capacitance, and V is voltage; and P=V*I, where P is electrical power, V is voltage and I is current.

Moreover, the terms "piezo" and "piezoelectric" as used in the present application may be interchangeable. Same applies for the terms "electric" and "electrical".

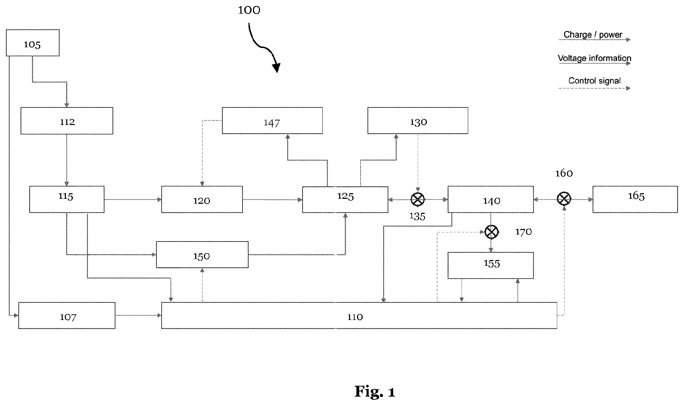

**Fig. 1** shows an exemplary schematic diagram of a system 100 for a shoe sole comprising a piezo element 105 (e.g., a piezo generator) according to the invention. In the following, the operation of the system 100 will be described in more detail.

At the beginning, the system 100 is empty of charge/current/voltage, no electrical energy is stored and units (or electrical components) requiring electrical energy are set to OFF.

As described before, the piezo element 105 (e.g., a piezo generator) creates an electrical signal or current as a result of a mechanical deformation. It is noted that also other types of elements capable of creating electrical current from mechanical strain may be used to realize the invention.

Information about the created electrical current (or input voltage) at the piezo element 105 is obtained by the signal processing unit 107 and may later be provided to the power management unit 110 (e.g., a control logic).

The electrical current from the piezo element 105 is then conveyed to the rectifier unit 112 which converts the alternating current (AC) signal of the piezo element 105 into a direct current (DC) signal.

Moreover, it is pointed out that various sensors may be used in connection with the system 100. For example, anyone or combinations of an accelerometer, a gyroscope, a magnetometer, a pressure sensor and a position sensor may be used with the system 100. In one example, these sensors may be controlled by the power management unit 110, which is adapted for controlling the remainder of the system 100, and the sensors may obtain the electrical energy needed for operating them from the energy storages as described herein. Thus, a self-sustaining system 100 with one or more sensors (e.g., accelerometer, gyroscope, magnetometer and/or position sensor), wherein the created electrical energy is used as both, sensor signal and energy for operating the system 100, may be realized by other types of elements (e.g., of an electromagnetic type comprising a body, with permanent magnetization, configured to move within a coil, wherein the movement is created by exerting pressure on the element).

The first energy storage 115 (e.g., a first capacitor) is loaded first by the electrical signal and the corresponding voltage in the first capacitor will rise (V=Q/C), where C is capacitance, Q is charge and V is voltage.

The electrical current is then passing through the regulator unit 120. The regulator unit 120 is preferably a junction field-effect transistor, JFET, regulator. At the beginning of operation, the regulator unit 120 is in a non-regulating mode so that the electrical current directly flows into the second energy storage 125 (e.g., a second capacitor).

When the voltage in the second energy storage 125 exceeds a certain voltage level, a first comparator unit 130 controls a first switching unit 135 so that electrical current is conveyed into the third energy storage 140 (e.g., a third capacitor). At the same time, the power management unit 110 is powered and set to ON.

The voltage level detection method of the first comparator unit 130 may be used with a resistor bridge that is in series with load switch components, which are connected to capacitors. Also direct voltage measurement methods may be used.

The first energy storage 115, the second energy storage 125 and the third energy storage 140 may be capacitors, supercapacitors, thin film Lithium batteries, or other types of suitable energy storages (e.g. any battery). Of course, various combinations of any of these types may be used. For instance, the first energy storage 115 may be a capacitor, and the second energy storage 125 may be a thin film lithium battery. In this way, different properties and advantages of the respective type of energy storage may be optimally used. As an example, an energy storage of a first type may quickly charge but cannot hold the stored energy for a longer time period. Another energy storage may need longer to charge but be able to store the energy for a longer time period.

In case the voltage in the second energy storage 125 exceeds the regulation threshold of electrical energy measured by the second comparator unit 147, the regulator unit 120 switches in a regulating mode so that the second energy storage 125 and/or the third energy storage 140 may stay in a regulated voltage range between 1.0 to 4.0 V, preferably 1.5 to 3.5 V, more preferably 2.0 to 3.0 V. In this regulated voltage range, the voltage in the first energy storage 115 may rise and electrical energy may accumulate (W=0.5*C*V²), where W is electrical energy, C is capacitance, and V is voltage.

As soon as the voltage in the first energy storage 115 exceeds the upper converter threshold, the converter unit 150 (e.g., a flyback converter as will be described later) will get into from the non-active mode into the active mode to selectively control the transfer of an amount of electrical energy between the first energy storage 115 and the second energy storage 125.

In the active mode, the converter unit 120 transfer charge (or electrical energy) from the first energy storage 115 to the second energy storage 125 by electrical power conversion as explained above. In this way, selectively controlling between the first energy storage 115 and the second energy storage 125 according to the convention may be obtained.

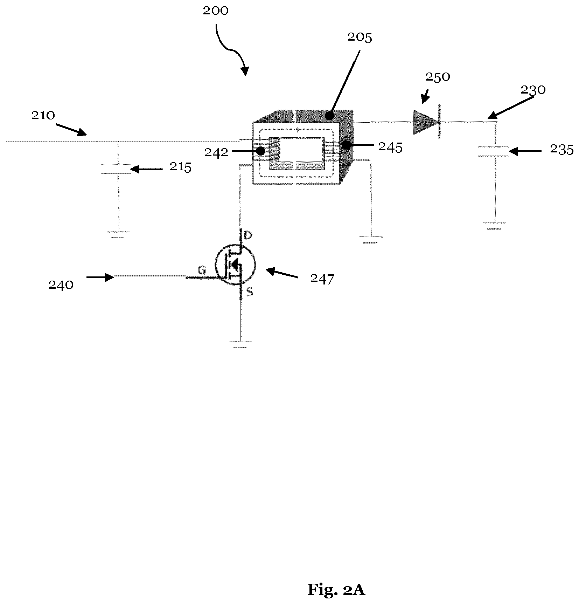

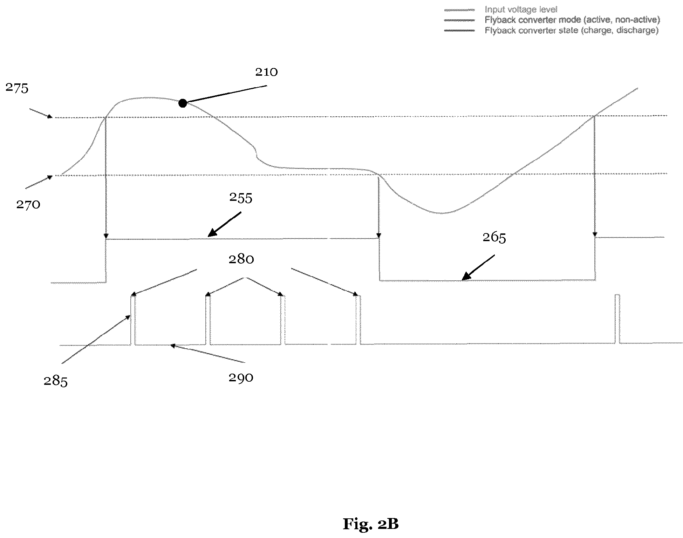

This transfer of electrical energy is done with a certain (switching) frequency causing the converter unit 120 to switch between a charge state and a discharge state (as will be explained later with respect to Figs. 2A and 2B). This switching of the converter unit 150 may be adapted so that the amount of charge to be transferred (and thus the amount of electrical energy) may be selectively controlled. At a higher switching frequency, more charge may be transferred in the same amount of time during the active mode because the charge state may occur more often.

The active or non-active mode of the converter unit 150 is based on the input voltage of the first energy storage 125 from the piezo element 110, namely the upper converter threshold and the lower converter threshold. In one example, the power management unit 110 may check every 200 ms the voltage level in the first energy storage 125. Depending on the specific properties, other time intervals for checking the voltage level may also be applicable, such as every 50 ms, 100 ms, 300 ms or 500 ms.

When in active mode, the power management unit 110 generates a control (switching) signal and sends it to the converter unit 150. This control (switching) signal manages the converter unit's charge and discharge state by using a metal oxide semiconductor field-effect transistor, MOSFET, switch (not shown). Other FET-based switches are also conceivable.

When the converter unit 150, e.g., a flyback converter, is in the charge state (e.g., the MOSFET switch is conducting), electrical energy is loaded from the first energy storage 115 to the primary transformer side of the flyback converter 150. The duration of the charge state may be defined in the power management unit 110 (e.g., in the range of 20 to 180 ns, preferably 50 to 150 ns, more preferably 80 to 120 ns, most preferably about 100 ns or 200 to 400 ns, preferably 250 to 350 ns, more preferably 275 to 325 ns or 225 to 275 ns, most preferably about 300 ns).

As soon as the converter unit 150 switches into the discharge state (e.g., the MOSFET switch is non-conducting), the electrical energy is transferred from the primary transformer side into the secondary transformer side of the converter unit 150 and then to the second energy storage 125. These charge-discharge-switches may be scheduled periodically while the converter unit 150 is the active mode and may be referred to the selective control according to the present application. The frequency of this scheduling is the mentioned switching frequency and may be adapted by the power management unit 110 as explained above.

When charge (or electrical energy) moves into the primary transformer side of the converter unit 150, the voltage in the first energy storage 115 will drop. As soon as the voltage in the first energy storage 115 drops below the lower converter threshold, the converter unit 150 will get into the non-active mode and the power management unit 110 may stop the mentioned control signal switching.

It is pointed put that the duration of the converter unit 150 being in the active mode may be measured and may be used to adjust the switching frequency, wherein the optimal switching frequency may depend on the charge created in the piezo element 110 and/or the overall power that is used by the system 100. In this way, the optimal switching frequency may either be determined by a calculation in the control unit 155 (e.g., a microcontroller) and/or within the power management unit 110. Once determined, this switching frequency may be used in the power management unit 110 to switch the charge and discharge state of the converter unit 150. Therefore, the converter unit 150 may operate in the optimal mode.

The power management unit 110 may cause at least one of the following once certain voltage levels are sufficient: the second switching unit 160 and/or the third switching unit 170 to switch on, the supercapacitor storage 165 and/or the control unit 155 to get up.

The second energy storage 125 and/or the third energy storage 140 may be supplied from the supercapacitor storage 165 (or a battery) if the electrical signal from the piezo element 110 is too less or stopped.

In addition, the electrical energy from the third energy storage 140 may also be used for other purposes, like fast start-up of the system 100. In this way, the system 100 may manage itself based on self-harvested energy. Nevertheless, the system 100 may be designed to have a very low power consumption.

The energy storages mentioned above may be one or more of a capacitor, supercapacitor, thin film Lithium battery or other suitable types of energy storages (e.g. any battery) which has a lower power leakage and small dimensions. The firmware of the control unit 155 may be designed in a way that it is in sleep mode when not used. This allows for a lower power consumption and a more efficient use of energy.

Figs.2A and 2B illustrate the circuit and operation of a converter unit in a system (e.g., converter unit 150 in system 100 as described for Fig. 1) for a shoe sole according to the present invention.

Fig. 2A shows an exemplary circuit diagram of the converter unit, wherein the converter unit is a flyback converter 200 in the active mode similar to the converter unit 150 in Fig. 1. In the following, the operation of the flyback converter 200 in the active mode will be described in more detail.

As mentioned, the flyback converter 200 as a transformer 205 may be used for direct currents conversion, DC/DC conversion, with galvanic isolation between the input voltage 210, e.g., from a piezo element (not shown, but similar to the piezo element 110) and the output voltage 230. The input voltage 210 (and the corresponding electrical energy) is applied to the first capacitor 215 (similar to the first energy storage 115) and the output voltage 230 (and the corresponding electrical energy) is applied to the second capacitor 235 (similar to the second energy storage 125).

When in active mode, a power management unit (similar to the power management unit 110) generates a control (switching) signal 240 and sends it to the flyback converter 200 by using a metal oxide semiconductor field-effect transistor, MOSFET, switch 247. As mentioned, this control (switching) signal 240 together with the MOSFET switch 247 may manage the charge state and the discharge state of the flyback converter 200 for the selective control of the transfer of an amount of electrical energy between the first capacitor 215 and the second capacitor 235.

When the MOSFET switch 247 is conducting, the flyback converter 200 is in the charge state. Electrical energy is then loaded from the first capacitor 215 to the primary transformer side 242 of the flyback converter 200. The duration of the charge state may be defined in the power management unit, as explained above (e.g., in the range of 20 to 180 ns, preferably 50 to 150 ns, more preferably 80 to 120 ns, most preferably about 100 ns or 200 to 400 ns, preferably 250 to 350 ns, more preferably 275 to 325 ns or 225 to 275 ns).

When the MOSFET switch 247 is non-conducting the flyback converter 200 is in the discharge state. The electrical energy is then transferred from the primary transformer side 242 into the secondary transformer side 245 of the flyback converter 200.

This electrical energy is further transferred via a rectifier unit 250, e.g., a rectifying diode, to the second capacitor 235. The transitions (or switches) between the charge state and the discharge state of the flyback converter 200 may be scheduled periodically with the mentioned switching frequency applied by the combination of the power management unit and the MOSFET switch 247.

**Fig. 2B** illustrates the different modes and different states of the flyback converter 200 changing over time (from left to right) and depending on the input voltage 210, e.g., from the piezo element (not shown, but similar to the piezo element 110). The active mode 255 or the non-active mode 265 of the flyback converter 200 are based on two specific input voltages 210 at the first capacitor 215, namely the lower converter threshold 270 (for the non-active mode 265) and the upper converter threshold 275 (for the active mode 255).

When the input voltage 210 in the first capacitor 215 exceeds the upper converter threshold 275, the flyback converter 200 will get into the active mode 255, as explained above.

During this mode, the flyback converter 200 switches between the charge state 285 and the discharge state 290 with the switching frequency 280.

In the charge state 285, electrical energy is loaded from the first capacitor 215 to the primary transformer side 242 of the flyback converter 200. When in the discharge state 290, the electrical energy is then transferred from the primary transformer side 242 into the secondary transformer side 245 of the flyback converter 200.

The duration of the charge state 285 may be seen as pulse durations of charging time. In Fig. 2B, there are four distinct (energy or charge) pulses during four charge states 285. At a higher switching frequency 280, more pulses (or charge states 285) in the active mode 255 may occur so that more total charge (and consequently a higher amount of electrical energy) may be transferred in the same amount of time.

When the input voltage 210 in the first capacitor 215 drops below the lower converter threshold 270, the flyback converter 200 will get into the non-active mode 265 and switching between the charge state 285 and the discharge state 290 stops.

As soon as the input voltage 210 in the first capacitor 215 exceeds again the upper converter threshold 275, the flyback converter 200 will get back into the active mode 255 and switching between the charge state 285 and the discharge state 290 will continue.

## Claims

1. A system (100) for a shoe sole, comprising:
a. at least one piezo element (110) adapted to produce an electrical signal (210) upon mechanical deformation of the at least one piezo element (110);
b. at least one first energy storage (115, 215) and at least one second energy storage (125, 235), the at least one first energy storage (115, 215) and the at least one second energy storage (125, 235) being adapted to store electrical energy obtained from the electrical signal (210);
c. at least one converter unit (150, 200) adapted to selectively control a transfer of an amount of electrical energy between the at least one first energy storage (115, 215) and the at least one second energy storage, wherein the at least one converter unit (150, 200) is adapted to selectively control the transfer of an amount of electrical energy based at least in part on a switching frequency (280) between a charge state (285) and a discharge state (290) of the at least one converter unit (150, 200); and **characterized in that** the system (100) further comprises
d. a control unit (155) adapted to calculate the switching frequency (280).

2. The system (100) according to the preceding claim, wherein the switching frequency (280) is based at least in part on the electrical signal (210) of the at least one piezo element (110) and/or an overall power used by the system (100).

3. The system (100) according to one of the preceding claims, wherein the charge state (285) has a duration in the range of 20 to 180 ns, preferably 50 to 150 ns, more preferably 80 to 120 ns, most preferably about 100 ns or 200 to 400 ns, preferably 250 to 350 ns, more preferably 275 to 325 ns or 225 to 275 ns, most preferably about 300 ns.

4. The system (100) according to one of the preceding claims, wherein the at least one converter unit (150, 200) has an active mode (255) and a non-active mode (265), wherein a transition between the active mode (255) and the non-active mode (265) is based at least in part on a lower converter threshold (270) and/or an upper converter threshold (275) for the electrical energy measured at the at least one first energy storage (115, 215) and wherein the selective control of the at least one converter unit (150, 200) is only provided in the active mode (255).

5. The system (100) according to one of the preceding claims, wherein the at least one converter unit (150, 200) is a flyback converter (200) having a primary transformer side (242) connected with the at least one first energy storage (115, 215) and a secondary transformer side (245) connected with the at least one second energy storage (125, 235).

6. The system (100) according to one of the preceding claims, wherein the electrical energy is transferred from the at least one first energy storage (115, 215) to the at least one converter unit (150, 200) in the charge state (285) and the electrical energy is transferred from the at least one converter unit (150, 200) to the at least one second energy storage (125, 235) in the discharge state (290).

7. The system (100) according to one of the preceding claims, wherein the at least one converter unit (150, 200) comprises a metal oxide semiconductor field-effect transistor, MOSFET, switch (247) adapted to switch the at least one converter unit (150, 200) between the charge state (285) and the discharge state (290).

8. The system (100) according to one of the preceding claims, further comprising a power management unit (110) adapted to generate a control signal (240) to switch the at least one converter unit (150, 200) between the charge state (285) and the discharge state (290).

9. The system (100) according to one of the preceding claims, further comprising at least one third energy storage (140) adapted to store electrical energy obtained from the electrical signal (210) and to provide electrical energy to the at least one second energy storage (125, 235) when the electrical signal (210) from the at least one piezo element drops below a piezo threshold of electrical energy.

10. The system (100) according to one of the preceding claims, further comprising at least one regulator unit (120), preferably a junction field-effect transistor, JFET, regulator, adapted to switch between a regulating mode and a non-regulating mode of the at least one regulator unit (120) based at least in part of a regulation threshold of electrical energy.

11. The system (100) according to one of the preceding claims, further comprising at least one rectifying unit (112) adapted to convert the electrical signal (210).

12. A shoe sole comprising the system (100) according to one of the preceding claims.

13. A shoe, in particular a sports shoe, comprising the shoe sole according to the preceding claim.

14. A method for operating the system (100) according to one of the claims 1 - 11, the method comprising:
a. generating the electrical signal (210) upon mechanical deformation of the at least one piezo element (105);
b. selectively controlling the transfer of an amount of electrical energy between the at least one first energy storage (115, 215) and the at least one second energy storage (125, 235), wherein selectively controlling comprises switching the at least one converter unit (150, 200) between the charge state (285) and the discharge state (290) by using the switching frequency (280) and wherein the electrical energy is transferred from the at least one first energy storage (115, 215) to the at least one converter unit (150, 200) in the charge state (285) and the electrical energy is transferred from the at least one converter unit (150, 200) to the at least one second energy storage (125, 235) in the discharge state (290); and
c. calculating the switching frequency (280).

15. The method according to the preceding claim, further comprising switching the system (100) between the active mode (255) and the non-active mode (265) and/or between the regulating mode and the non-regulating mode.

## Patentansprüche

1. System (100) für eine Schuhsohle, umfassend:
a. mindestens ein Piezoelement (110), das dazu ausgelegt ist, bei mechanischer Verformung des mindestens einen Piezoelements (110) ein elektrisches Signal (210) zu erzeugen;
b. mindestens einen ersten Energiespeicher (115, 215) und mindestens einen zweiten Energiespeicher (125, 235), wobei der mindestens eine erste Energiespeicher (115, 215) und der mindestens eine zweite Energiespeicher (125, 235) dazu ausgelegt sind, aus dem elektrischen Signal (210) erhaltene elektrische Energie zu speichern;
c. mindestens eine Wandlereinheit (150, 200), die dazu ausgelegt ist, eine Übertragung einer Menge an elektrischer Energie zwischen dem mindestens einen ersten Energiespeicher (115, 215) und dem mindestens einen zweiten Energiespeicher selektiv zu steuern, wobei die mindestens eine Wandlereinheit (150, 200) dazu ausgelegt ist, die Übertragung einer Menge an elektrischer Energie basierend zumindest teilweise auf einer Schaltfrequenz (280) zwischen einem Ladezustand (285) und einem Entladezustand (290) der mindestens einen Wandlereinheit (150, 200) selektiv zu steuern; und **dadurch gekennzeichnet, dass** das System (100) ferner umfasst
d. eine Steuereinheit (155), die dazu ausgelegt ist, die Schaltfrequenz (280) zu berechnen.

2. System (100) nach dem vorhergehenden Anspruch, wobei die Schaltfrequenz (280) zumindest teilweise auf dem elektrischen Signal (210) des mindestens einen Piezoelements (110) und/oder einer von dem System (100) verwendeten Gesamtleistung basiert.

3. System (100) nach einem der vorhergehenden Ansprüche, wobei der Ladezustand (285) eine Dauer im Bereich von 20 bis 180 ns, vorzugsweise 50 bis 150 ns, mehr bevorzugt 80 bis 120 ns, am meisten bevorzugt etwa 100 ns oder 200 bis 400 ns, vorzugsweise 250 bis 350 ns, mehr bevorzugt 275 bis 325 ns oder 225 bis 275 ns, am meisten bevorzugt etwa 300 ns, aufweist.

4. System (100) nach einem der vorhergehenden Ansprüche, wobei die mindestens eine Wandlereinheit (150, 200) einen aktiven Modus (255) und einen nicht aktiven Modus (265) aufweist, wobei ein Übergang zwischen dem aktiven Modus (255) und dem nicht aktiven Modus (265) zumindest teilweise auf einer unteren Wandlerschwelle (270) und/oder einer oberen Wandlerschwelle (275) für die an dem mindestens einen ersten Energiespeicher (115, 215) gemessene elektrische Energie basiert und wobei die selektive Steuerung der mindestens einen Wandlereinheit (150, 200) nur in dem aktiven Modus (255) bereitgestellt wird.

5. System (100) nach einem der vorhergehenden Ansprüche, wobei die mindestens eine Wandlereinheit (150, 200) ein Sperrwandler (200) ist, der eine primäre Transformatorseite (242), die mit dem mindestens einen ersten Energiespeicher (115, 215) verbunden ist, und eine sekundäre Transformatorseite (245), die mit dem mindestens einen zweiten Energiespeicher (125, 235) verbunden ist, aufweist.

6. System (100) nach einem der vorhergehenden Ansprüche, wobei die elektrische Energie von dem mindestens einen ersten Energiespeicher (115, 215) zu der mindestens einen Wandlereinheit (150, 200) in dem Ladezustand (285) übertragen wird und die elektrische Energie von der mindestens einen Wandlereinheit (150, 200) zu dem mindestens einen zweiten Energiespeicher (125, 235) in dem Entladezustand (290) übertragen wird.

7. System (100) nach einem der vorhergehenden Ansprüche, wobei die mindestens eine Wandlereinheit (150, 200) einen Metall-Oxid-Halbleiter-Feldeffekttransistor-, MOSFET-, Schalter (247) umfasst, der dazu ausgelegt ist, die mindestens eine Wandlereinheit (150, 200) zwischen dem Ladezustand (285) und dem Entladezustand (290) zu schalten.

8. System (100) nach einem der vorhergehenden Ansprüche, ferner umfassend eine Leistungsverwaltungseinheit (110), die dazu ausgelegt ist, ein Steuersignal (240) zu erzeugen, um die mindestens eine Wandlereinheit (150, 200) zwischen dem Ladezustand (285) und dem Entladezustand (290) zu schalten.

9. System (100) nach einem der vorhergehenden Ansprüche, ferner umfassend mindestens einen dritten Energiespeicher (140), der dazu ausgelegt ist, aus dem elektrischen Signal (210) erhaltene elektrische Energie zu speichern und dem mindestens einen zweiten Energiespeicher (125, 235) elektrische Energie bereitzustellen, wenn das elektrische Signal (210) von dem mindestens einen Piezoelement unter einen Piezoschwellenwert für elektrische Energie fällt.

10. System (100) nach einem der vorhergehenden Ansprüche, ferner umfassend mindestens eine Reglereinheit (120), vorzugsweise einen Sperrschicht-Feldeffekttransistor-, JFET-, Regler, der dazu ausgelegt ist, zwischen einem Regelmodus und einem Nicht-Regelmodus der mindestens einen Reglereinheit (120) basierend zumindest teilweise auf einem Regelschwellenwert für elektrische Energie zu schalten.

11. System (100) nach einem der vorhergehenden Ansprüche, ferner umfassend mindestens eine Gleichrichtereinheit (112), die dazu ausgelegt ist, das elektrische Signal (210) umzuwandeln.

12. Schuhsohle, umfassend das System (100) nach einem der vorhergehenden Ansprüche.

13. Schuh, insbesondere Sportschuh, umfassend die Schuhsohle nach dem vorhergehenden Anspruch.

14. Verfahren zum Betreiben des Systems (100) nach einem der Ansprüche 1 - 11, wobei das Verfahren umfasst:
a. Erzeugen des elektrischen Signals (210) bei mechanischer Verformung des mindestens einen Piezoelements (105);
b. selektives Steuern der Übertragung einer Menge an elektrischer Energie zwischen dem mindestens einen ersten Energiespeicher (115, 215) und dem mindestens einen zweiten Energiespeicher (125, 235), wobei das selektive Steuern das Schalten der mindestens einen Wandlereinheit (150, 200) zwischen dem Ladezustand (285) und dem Entladezustand (290) unter Verwendung der Schaltfrequenz (280) umfasst und wobei die elektrische Energie von dem mindestens einen ersten Energiespeicher (115, 215) zu der mindestens einen Wandlereinheit (150, 200) in dem Ladezustand (285) übertragen wird und die elektrische Energie von der mindestens einen Wandlereinheit (150, 200) zu dem mindestens einen zweiten Energiespeicher (125, 235) in dem Entladezustand (290) übertragen wird; und
c. Berechnen der Schaltfrequenz (280).

15. Verfahren nach dem vorhergehenden Anspruch, ferner umfassend das Schalten des Systems (100) zwischen dem aktiven Modus (255) und dem nicht aktiven Modus (265) und/oder zwischen dem Regelmodus und dem Nicht-Regelmodus.

## Revendications

1. Un système (100) pour une semelle de chaussure, comprenant :
a. au moins un élément piézo (110) apte à produire un signal électrique (210) sur déformation mécanique de l'au moins un élément piézo (110) ;
b. au moins un premier stockage d'énergie (115, 215) et au moins un second stockage d'énergie (125, 235), l'au moins un premier stockage d'énergie (115, 215) et l'au moins un second stockage d'énergie (125, 235) étant aptes à stocker de l'énergie électrique obtenue du signal électrique (210) ;
c. au moins une unité de convertisseur (150, 200) apte à sélectivement contrôler un transfert d'une quantité d'énergie électrique entre l'au moins un premier stockage d'énergie (115, 215) et l'au moins un second stockage d'énergie, l'au moins une unité de convertisseur (150, 200) étant apte à sélectivement contrôler le transfert d'une quantité d'énergie électrique au moins en partie sur la base d'une fréquence de commutation (280) entre un état de charge (285) et un état de décharge (290) de l'au moins une unité de convertisseur (150, 200) ; et **caractérisé en ce que** le système (100) comprend en outre
d. une unité de contrôle (155) apte à calculer la fréquence de commutation (280).

2. Le système (100) selon la revendication précédente, dans lequel la fréquence de commutation (280) est au moins en partie basée sur le signal électrique (210) de l'au moins un élément piézo (110) et/ou d'une puissance globale utilisée par le système (100).

3. Le système (100) selon l'une des revendications précédentes, dans lequel l'état de charge (285) a une durée comprise dans la plage de 20 à 180 ns, préférentiellement 50 à 150 ns, plus préférentiellement 50 à 150 ns, plus préférentiellement 80 à 120 ns, le plus préférentiellement environ 100 ns ou 200 à 400 ns, préférentiellement 250 à 350 ns, plus préférentiellement 275 à 325 ns ou 225 à 275 ns, le plus préférentiellement environ 300 ns.

4. Le système (100) selon l'une des revendications précédentes, dans lequel l'au moins une unité de convertisseur (150, 200) possède un mode actif (255) et un mode non actif (265), dans lequel une transition entre le mode actif (255) et le mode non actif (265) est au moins en partie basée sur un seuil inférieur de convertisseur (270) et/ou un seuil supérieur de convertisseur (275) pour l'énergie électrique mesurée au niveau de l'au moins un premier stockage d'énergie (115, 215), et dans lequel le contrôle sélectif de l'au moins une unité de convertisseur (150, 200) n'est assuré que dans le mode actif (255).

5. Le système (100) selon l'une des revendications précédentes, dans lequel l'au moins une unité de convertisseur (150, 200) est un convertisseur flyback (200) avec un côté de transformateur primaire (242) relié à l'au moins un premier stockage d'énergie (115, 215) et un côté de transformateur secondaire (245) relié à l'au moins un second stockage d'énergie (125, 235).

6. Le système (100) selon l'une des revendications précédentes, dans lequel l'énergie électrique est transférée de l'au moins un premier stockage d'énergie (115, 215) à l'au moins une unité de convertisseur (150, 200) à l'état de charge (285) et l'énergie électrique est transférée de l'au moins une unité de convertisseur (150, 200) à l'au moins un second stockage d'énergie (125, 235) à l'état de décharge (290).

7. Le système (100) selon l'une des revendications précédentes, dans lequel l'au moins une unité de convertisseur (150, 200) comprend un commutateur à transistor à effet de champ semi-conducteur métal-oxyde, MOSFET, (247) apte à commuter l'au moins unité de convertisseur (150, 200) entre l'état de charge (285) et l'état de décharge (290).

8. Le système (100) selon l'une des revendications précédentes, comprenant en outre une unité de gestion de l'énergie (110) apte à générer un signal de contrôle (240) pour commuter l'au moins une unité de convertisseur (150, 200) entre l'état de charge (285) et l'état de décharge (290).

9. Le système (100) selon l'une des revendications précédentes, comprenant en outre au moins un troisième stockage d'énergie (140) apte à stocker de l'énergie électrique obtenue du signal électrique (210) et à délivrer de l'énergie électrique à l'au moins un second stockage d'énergie (125, 235) lorsque le signal électrique (210) provenant de l'au moins un élément piézo chute au-dessous d'un seuil piézo d'énergie électrique.

10. Le système (100) selon l'une des revendications précédentes, comprenant en outre au moins une unité de régulateur (120), de préférence un régulateur à transistor à jonction à effet de champ, JFET, apte à commuter entre un mode de régulation et un mode de non régulation de l'au moins une unité de régulateur (120) au moins en partie sur la base d'un seuil de régulation d'énergie électrique.

11. Le système (100) selon l'une des revendications précédentes, comprenant en outre au moins une unité redresseuse (112) apte à convertir le signal électrique (210).

12. Une semelle de chaussure comprenant le système (100) selon l'une des revendications précédentes.

13. Une chaussure, en particulier une chaussure de sport, comprenant la semelle de chaussure selon la revendication précédente.

14. Un procédé de mise en œuvre du système (100) selon l'une des revendications 1 à 11, le procédé comprenant :
a. la génération du signal électrique (210) à la déformation mécanique de l'au moins un élément piézo (105) ;
b. le contrôle sélectif du transfert d'une quantité d'énergie électrique entre l'au moins un premier stockage d'énergie (115, 215) et l'au moins un second stockage d'énergie (125, 235), le contrôle sélectif comprenant la commutation de l'au moins une unité de convertisseur (150, 200) entre l'état de charge (285) et l'état de décharge (290) par utilisation de la fréquence de commutation (280), et l'énergie électrique étant transférée de l'au moins un premier stockage d'énergie (115, 215) à l'au moins une unité de convertisseur (150, 200) à l'état de charge (285), et l'énergie électrique étant transférée de l'au moins une unité de convertisseur (150, 200) à l'au moins un second stockage d'énergie (125, 235) à l'état de décharge ; et
c. le calcul de la fréquence de commutation (280).

15. Le procédé selon la revendication précédente, comprenant en outre la commutation du système (100) entre le mode actif (255) et le mode non actif (265) et/ou entre le mode de régulation et le mode de non régulation.
